# EUROPEAN PATENT SPECIFICATION

(11) **EP 4 602 499 B1**
(45) Date of publication and mention of the grant of the patent: **25.11.2026**
(21) Application number: 23786078.8
(22) Date of filing: 09.10.2023
(51) Int. Cl.: G06F 21/73, G06F 21/76, G06F 30/30

(54) **INTEGRATED CIRCUIT DEVICE AND METHOD FOR AUTHENTICATING THE HARDWARE DESIGN OF SUCH INTEGRATED CIRCUIT DEVICE**
INTEGRIERTE SCHALTUNGSVORRICHTUNG UND VERFAHREN ZUR AUTHENTIFIZIERUNG DES HARDWARE-ENTWURFS EINER SOLCHEN INTEGRIERTEN SCHALTUNGSVORRICHTUNG
DISPOSITIF À CIRCUIT INTÉGRÉ ET PROCÉDÉ D'AUTHENTIFICATION DE LA CONCEPTION MATÉRIELLE D'UN TEL DISPOSITIF À CIRCUIT INTÉGRÉ

(30) Priority: 10.10.2022 EP 22200529
(43) Date of publication of application: 20.08.2025
(73) Proprietor: Nagravision Sarl, 1033 Cheseaux-sur-Lausanne (CH)
(72) Inventor: PELLETIER, Hervé, 1033 CHESEAUX-SUR-LAUSANNE (CH)
(74) Representative: Santarelli
(86) International application number: PCT/EP2023/077833
(87) International publication number: WO 2024/079017

(56) References cited:
- US-A1- 2007 220 263
- GEORG T BECKER ET AL: "Side-channel based watermarks for integrated circuits", HARDWARE-ORIENTED SECURITY AND TRUST (HOST), 2010 IEEE INTERNATIONAL SYMPOSIUM ON, IEEE, PISCATAWAY, NJ, USA, 13 June 2010 (2010-06-13), pages 30 - 35, XP031710171, ISBN: 978-1-4244-7811-8
- COLOMBIER BRICE ET AL: "Survey of hardware protection of design data for integrated circuits and intellectual properties", IET COMPUTERS AND DIGITAL TECHNIQUES, THE INSTITUTION OF ENGINEERING AND TECHNOLOGY, MICHAEL FARADAY HOUSE, SIX HILLS WAY, STEVENAGE, HERTS. SG1 2AY, UK, vol. 8, no. 6, 1 November 2014 (2014-11-01), pages 274 - 287, XP006050124, ISSN: 1751-8601, DOI: 10.1049/IET-CDT.2014.0028

## Description

### 1. FIELD OF THE DISCLOSURE

The field of the disclosure is that of the manufacture of electronic integrated circuits.

More specifically, the disclosure relates to a technique for authenticating the hardware design of such integrated circuits.

The disclosure can be of interest e.g. in the field of semiconductor manufacturing.

### 2. TECHNOLOGICAL BACKGROUND

The expensive cost of semiconductor fabrication process explains the reduction of the number of companies with their own production plants. Today only four or five world global semiconductor manufacturers continue to exist. More and more semiconductor companies are fabless and entrust, for the fabrication, these manufacturer companies.

In this case it becomes difficult to know if the chip design will be modified intentionally (or not) by the manufacturer, e.g. by direct modification of the hardware design (e.g. layout modification) or by integration of a proprietary hardware block without authorization. Current ways to check the integrity of the circuit, such as cartography of all interconnections and transistor and gate positions, are complex, expensive and time consuming.

There is thus a need for a technique that allows authenticating the hardware design of an integrated circuit device.

The article by Georg T. Becker et al., "Side-Channel Based Watermarks for Integrated Circuits", Hardware-Oriented Security and Trust (HOST), 2010 IEEE International Symposium, 13 June 2010, pages 30-35, discloses side-channel based watermarks for integrated circuits. More particularly, this document proposes embedding a watermarking signal in a side-channel of an integrated circuit, such as the power consumption side-channel, and detecting the presence of the watermark by side-channel analysis, for example by correlation.

Patent document US 2007/0220263 A1 discloses a watermarking apparatus for an electronic circuit, in particular for an FPGA or ASIC. The apparatus comprises a watermark memory and a watermarking signal generator configured to generate, based on the watermark, a signal detectable on a power supply line of the electronic circuit, so that the watermark can be detected by measuring and processing a power or voltage signal.

### 3. SUMMARY

A particular aspect of the present disclosure relates to an integrated circuit device comprising at least one specific block of logic gates, hereafter SBLG, configured for generating deterministic internal state value changes inducing current leakages with corresponding deterministic variations in the integrated circuit device. The at least one SBLG comprises a non-linear logical function.

Thus, the present disclosure proposes a new and inventive solution for allowing authenticating the hardware design of an integrated circuit device.

More particularly, the generation of deterministic internal state value changes inducing current leakages with corresponding deterministic variations allows the detection of the presence of a given SBLG in the integrated circuit through the sensing of the electromagnetic, hereafter EM, field radiated by the signal propagation through the gates. For instance, a difference between the effective position of the given SBLG and its expected position may be representative e.g. of a modification of the hardware design (e.g. a modification of the layout or a modification of the netlist itself) of the integrated circuit or of an unauthorized integration, in the integrated circuit device, of a proprietary hardware block incorporating the SBLG. Furthermore, the non-linear logical function increases the number of internal state value changes and therefore the detectability of the SBLG(s) through the sensing of the induced current leakage. The non-linear behavior also increases the confidentiality of the SBLG(s) as it is more difficult to perform reverse engineering for identifying a non-linear logical function than a linear function.

In some embodiments, said at least one SBLG comprises a feedback loop from an output of the non-linear logical function toward an input of the non-linear logical function.

We thus get a period of transitions of the internal state of the SBLG(s) that is a function of the processing time of the given logical function. Such feedback induces a frequency response in the spectrum of the induced leakage current (and thus in the spectrum of the corresponding radiated EM field) at a frequency function of the inverse of the processing time of the given logical function. This allows simplifying the detection of SBLG(s) implemented in the integrated circuit device (e.g. for checking that a probe is well positioned above a SBLG, or to check that a given SBLG is indeed present on an integrated circuit that we suspect to be a counterfeit).

In some embodiments, the integrated circuit device comprises a plurality of SBLGs implemented at predetermined locations in the integrated circuit device.

Another particular aspect of the present disclosure relates to a method for authenticating the hardware design of an integrated circuit device comprising at least one SBLG configured for generating deterministic internal state value changes inducing current leakages with corresponding deterministic variations in the integrated circuit device. According to such method, an electronic device executes, for at least one SBLG:
- sending a command to an electromagnetic, hereafter EM, probe for having the probe positioned at a given position above a surface of the integrated circuit device for sensing the EM field at the given position;
- receiving from the EM probe a measurement signal representative of the EM field at the given position;
- performing a correlation between the measurement signal and a model signal representative of the deterministic internal state value changes in the SBLG delivering a correlation signal; and
- when at least one correlation peak is detected in the correlation signal, performing a first comparison between, on one hand, the given position of the probe and, on the other hand, an expected position of the SBLG in the integrated circuit device, a difference between the given position of the probe and the expected position of the SBLG in the integrated circuit device being representative of a hardware modification of the integrated circuit device or of an unauthorized integration, in the integrated circuit device, of a proprietary hardware block incorporating the SBLG.

Thus, the SBLG(s) implemented in the integrated circuit can be identified through the detection of the waveform of the EM field radiated by the leakage current in the integrated circuit. Indeed, the variations of such waveform is representative of the variations of the leakage current which is in turn representative of the deterministic internal state value changes of the SBLG(s). Consequently, a non-detection of an expected SBLG at a given location in the integrated circuit, or a modification in the expected (relative) location of a given SBLG (in comparison with positions of others SBLG(s)), can be interpreted as representative of a hardware modification of the integrated circuit device or of an unauthorized integration, in the integrated circuit device, of a proprietary hardware block incorporating the SBLG.

In some embodiments, the electronic device executes, for said at least one SBLG: sending a trigger command to the integrated circuit device for having the SBLG to generate the deterministic internal state value changes inducing current leakages with corresponding deterministic variations in the integrated circuit device. When said at least one correlation peak is detected in the correlation signal, performing a second comparison, in addition to said performing a first comparison or in place of said performing a first comparison, between, on one hand, an expected propagation duration of the trigger command up to the SBLG and, on the other hand, time information representative of a time duration between an instant of execution of said sending the trigger command and the correlation peak, a difference between the expected propagation duration and the time information being representative of a hardware modification of the integrated circuit device or of an unauthorized integration, in the integrated circuit device, of a proprietary hardware block incorporating the SBLG.

Thus, a hardware modification of the integrated circuit device can be detected through the time information representative of the time duration between the instant of execution of the sending of the trigger command and the correlation peak. Such timing information can be used in combination of the position of the probe when a correlation peak is detected, or in place of the position of the probe, for deciding that a hardware modification has been performed on the integrated circuit device.

In some embodiments, said sending a trigger command to the integrated circuit device comprises sending a seed value for setting the internal state of the SBLG to an initial value.

In some embodiments wherein said at least one SBLG comprises a logical function, the model signal is a function of a binary word resulting of an XOR logical function taking as arguments an input binary word of the logical function and an output binary word of the logical function.

The binary word resulting of the XOR logical function is representative of the number of bits that are different between the input binary word of the logical function and the output binary word of the logical function and it is called hamming distance function. The model signal is thus a function of a binary word representative of a number of changes of the internal state of the SBLG.

In some embodiments, the function of the binary word comprises a Hamming weight of the binary word.

Thus, having that the binary word resulting of the XOR logical function is representative of the number of bits that are different between the input binary word of the logical function and an output binary word of the logical function, the Hamming weight delivers a value representative of a number of logical "true" bits in such resulting binary word. Such value is thus representative of a number of changes of the internal state of the SBLG.

In some embodiments wherein said at least one SBLG comprises a feedback loop from an output of a given logical function toward an input of the given logical function, the electronic device executes, for said at least one SBLG: performing a spectral analysis of the measurement signal delivering a frequency domain representation of the measurement signal. Said performing a correlation, said performing a first comparison and/or said performing a second comparison are executed when a frequency response is detected at a predetermined frequency in the frequency domain representation of the measurement signal.

For instance, the predetermined frequency is a function of the inverse of the processing time of the loop back logical function implemented in the feedback loop of the SBLG. The detection of the presence of the SBLG is thus simplified. This allows e.g. verifying that the probe is well positioned above the SBLG before performing the correlation.

Another aspect of the present disclosure relates to a computer program product comprising program code instructions for implementing the above-mentioned method for authenticating the hardware design of an integrated circuit device (in any of the different embodiments discussed above), when said program is executed on a computer or a processor.

Another aspect of the present disclosure relates to an electronic device configured for implementing all or part of the steps of the above-mentioned method for authenticating the hardware design of an integrated circuit device (in any of the different embodiments discussed above). Thus, the features and advantages of this device are the same as those of the corresponding steps of said method. Therefore, they are not detailed any further.

### 4. LIST OF FIGURES

Other features and advantages of embodiments shall appear from the following description, given by way of indicative and non-exhaustive examples and from the appended drawings, of which:
- Figure 1 illustrates a probe sensing the EM field radiated by leakage currents in an integrated circuit device according to one embodiment of the present disclosure;
- Figure 2 illustrates an example of the structural blocks of an electronic device allowing all or part of the steps of the method for authenticating the hardware design of the integrated circuit device of Figure 1 to be executed according to one embodiment of the present disclosure;
- Figure 3 illustrates the steps of a method for authenticating the hardware design of the integrated circuit device of Figure 1 according to one embodiment of the present disclosure; and
- Figure 3a illustrates the steps of the method for authenticating the hardware design of the integrated circuit device of Figure 1 according to another embodiment of the present disclosure.

### 5. DETAILED DESCRIPTION

In all of the Figures of the present document, the same numerical reference signs designate similar elements and steps.

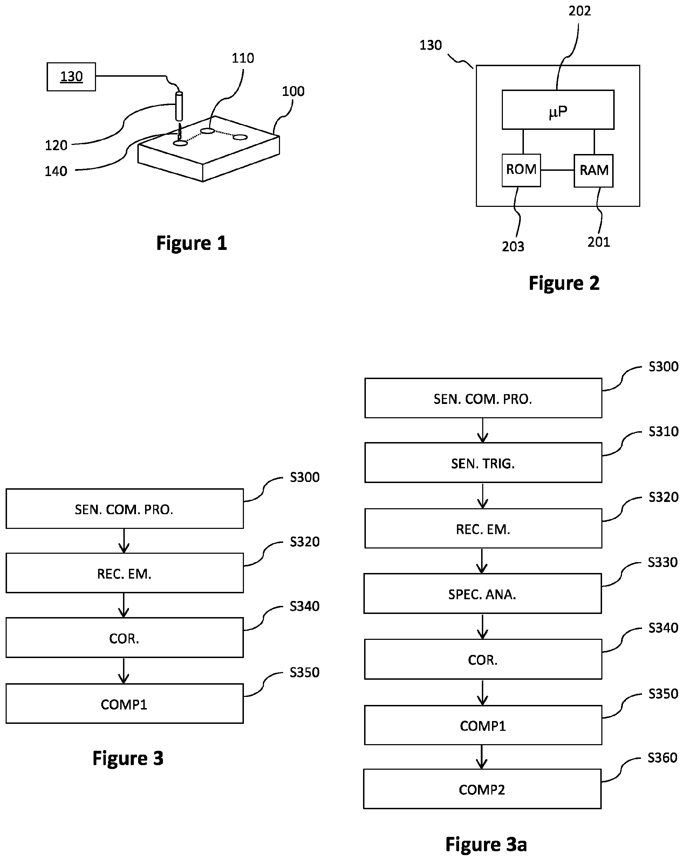

Referring now to **Figure 1****,** we describe an EM probe 120 sensing the EM field 140 radiated by leakage currents in an electronic integrated circuit device 100 according to one embodiment of the present disclosure.

More particularly, the integrated circuit device 100 (also referred to as an IC device, a chip, or a microchip) comprises a plurality of SBLGs 110. Such SBLG 110 is configured for generating deterministic internal state value changes inducing current leakages with corresponding deterministic variations in the integrated circuit device 100. Such deterministic internal state value changes result e.g. of the activation of specific logic functions as discussed below. The resulting deterministic variations allow the detection of the presence of the SBLGs 110 in the integrated circuit device 100 through the sensing of the EM field 140 radiated by the signal propagation through the gates and thus through the current leakages.

Indeed, such SBLG 110 can be duplicated and can be automatically/manually positioned in the integrated circuit device 100 according to rules (delay requirements...) used by the place and route design tool. With the place/route tools the designer knows the relative position of each SBLG 110 in the integrated circuit device 100. For instance, a plurality of SBLGs 110 is implemented at predetermined locations in the integrated circuit device 100. Thus, a difference between the effective position of a given SBLG 110, as estimated through the sensing of the EM field 140 radiated by the current leakages, and its expected position may be representative of a modification of the hardware design (e.g. a modification of the layout or a modification of the netlist itself) of the integrated circuit or of an unauthorized integration, in the integrated circuit device 100, of a proprietary hardware block which incorporates SBLGs 110.

However, in some embodiments, the integrated circuit device 100 comprises only one SBLG 110. Indeed, it can be sufficient to detect a difference between the effective position of a given SBLG 110 in the integrated circuit device 100, and its expected position for deciding e.g. that a modification of the hardware design (e.g. a modification of the layout or a modification of the netlist itself) of the integrated circuit occurred.

Back to Figure 1, the EM field 140 is sensed by the probe 120. Such EM probe 120 is in charge of the measurement of the EM field 140 radiated by the integrated circuit device 100. Today, an EM probe dedicated to the sensing of integrated circuits can collect an EM signal with an accuracy of about 20µm in terms of position above the integrated circuit being sensed and an accuracy in terms of timing in the capture of the waveform of the EM signal of about 1ns.

In some embodiments, all or part of the SBLG(s) 110 implemented in the integrated circuit device 100 comprise a non-linear logical function.

Indeed, such non-linearity increases the number of internal state value changes and therefore the detectability of the SBLG(s) 110 through the sensing of the induced current leakage. The non-linear behavior also increases the confidentiality of the SBLG(s) 110 as it is more difficult to perform reverse engineering for identifying a non-linear logical function than a linear function. In some embodiments, the non-linear logical function is achieved with a lookup table (like for example the AES lookup table (SBox)) or with any other cryptographic functions. In some embodiments, the non-linear logical hardware implementation is done with lines structures to reduce parasitic leakage.

In some embodiments, all or part of the SBLG(s) 110 implemented in the integrated circuit device 100 comprise a feedback loop from an output of a given logical function toward an input of the given logical function.

Thus, the given logical function takes as an input data the output binary word previously delivered by the given logical function. We thus get a period of transitions of the internal state of the SBLG(s) 110 that is a function of the processing time of the given logical function. Such feedback induces a frequency response in the spectrum of the induced leakage current (and thus in the spectrum of the corresponding radiated EM field 140) at a frequency function of the inverse of the processing time of the given logical function. This allows simplifying the detection of SBLG(s) 110 implemented in the integrated circuit device 100 as discussed more deeply below in relation with Figure 3 and Figure 3a (e.g. for checking that the probe 120 is well positioned above a given SBLG 110, or to check that a given SBLG 110 is indeed present on the integrated circuit 100).

Back to Figure 1, In some embodiments, the given logical function, that takes as an input data the output binary word previously delivered by the given logical function, is the non-linear logical function according to any of the embodiments discussed above.

In order to be able to implement all or part of the steps of the method for authenticating the hardware design of the integrated circuit device 100 in the various embodiments disclosed below in relationship with Figure 3 and Figure 3a, in some embodiments the electronic device 130 comprises **(****Figure 2****):**
- a non-volatile memory 203 (e.g. a read-only memory (ROM), a hard disk, a flash memory, etc.);
- a volatile memory 201 (e.g. a random-access memory or RAM) and a processor 202.

The non-volatile memory 203 is a non-transitory computer-readable carrier medium. It stores executable program code instructions, which are executed by the processor 202 in order to enable implementation of some steps of the method described below (method for authenticating the hardware design of the integrated circuit device 100) in the various embodiments disclosed in relationship with Figure 3 and Figure 3a.

Upon initialization, the aforementioned program code instructions are transferred from the non-volatile memory 203 to the volatile memory 201 so as to be executed by the processor 202. The volatile memory 201 likewise includes registers for storing the variables and parameters required for this execution.

The steps of the method for authenticating the hardware design of the integrated circuit device 100 may be implemented equally well:
- by the execution of a set of program code instructions executed by a reprogrammable computing machine such as a PC type apparatus, a DSP (digital signal processor) or a microcontroller. This program code instructions can be stored in a non-transitory computer-readable carrier medium that is detachable (for example a CD-ROM, a DVD-ROM, a USB key) or non-detachable; or
- by a dedicated machine or component, such as an FPGA (Field Programmable Gate Array), an ASIC (Application-Specific Integrated Circuit) or any dedicated hardware component.

In other words, the disclosure is not limited to a purely software-based implementation, in the form of computer program instructions, but that it may also be implemented in hardware form or any form combining a hardware portion and a software portion.

Referring now to **Figure 3****,** we describe a method for authenticating the hardware design of the integrated circuit device 100 according to one embodiment of the present disclosure.

More particularly, in a **step S300,** the electronic device 130 sends a command to the EM probe 120 for having the probe 120 positioned at a given position above a surface of the integrated circuit device 100 for sensing the EM field 140 at the given position.

In a **step S320,** the electronic device 130 receives, from the EM probe 120, a measurement signal representative of the EM field 140 at the given position. In that respect, in some embodiments, during step S320, the electronic device starts the integrated circuit 130, e.g. turns ON the power supply of the integrated circuit 130 for having the SBLG(s) starting to generate deterministic internal state value changes. Such SBLG(s) is(are) e.g. configured for having its internal state that takes a default initial internal state (e.g. a reset internal state value) for having the internal state value changes that are deterministic.

In a **step S340,** the electronic device 130 performs a correlation between the measurement signal and a model signal representative of the deterministic internal state value changes in one SBLG 110 delivering a correlation signal.

More particularly, such model signal results of a mathematical model representative of the deterministic internal state value changes in the SBLG 110, e.g. a model of the embedded logic functions implemented in the SBLG 110.

For instance, in some embodiments wherein the SBLG 110 comprises at least one logical function (whether a linear or a non-linear logical function as discussed above in relation with Figure 1), the model signal is a function of a binary word resulting of an XOR logical function taking as arguments an input binary word of said logical function and an output binary word of said logical function. Indeed, the binary word resulting of the XOR logical function is representative of the number of bits that are different between the input binary word of the logical function and the output binary word of the logical function and it is called hamming distance function. The model signal is thus a function of a binary word representative of a number of changes of the internal state of the SBLG 110.

In some embodiments, the function of the binary word resulting of the XOR logical function comprises a Hamming weight of the binary word. Indeed, having that the binary word resulting of the XOR logical function is representative of the number of bits that are different between the input binary word of the logical function and an output binary word of the logical function, the Hamming weight delivers a value representative of a number of logical "true" bits in such resulting binary word. Such value is thus representative of a number of changes of the internal state of the SBLG 110.

When a plurality of SBLGs 110 are implemented in the integrated circuit device 100, all or part of the SBLG(s) 110 may implement different deterministic internal state value changes, e.g. different embedded logic functions. In such embodiments, all or part of the model signals associated to the SBLG 110 expected to be implemented in the integrated circuit device 100 are tested through different correlations during the step S340. This allows testing the presence of different SBLGs 110 at the given position. However, in other embodiments, this is the model signal of the SBLG 110 expected to be implemented at the given position in the integrated circuit device 100 that is used to perform the correlation during the step S340.

Back to Figure 3, when one correlation peak is detected in the correlation signal delivered during the execution of step S340, during a **step S350,** the electronic device 130 performs a first comparison between, on one hand, the given position of the EM probe 120 and, on the other hand, an expected position of the SBLG 110 (i.e. the SBLG 110 with the deterministic internal state value changes corresponding to the model signal used for performing the correlation in step S340) in the integrated circuit device 100. More particularly, a difference between the given position of the probe 120 and the expected position of the SBLG 110 in the integrated circuit device 100 is representative of a hardware modification of the integrated circuit device 100 or of an unauthorized integration, in the integrated circuit device 100, of a proprietary hardware block which incorporates SBLG(s) 110. For instance, it can be decided that the integrated circuit device 100 has been modified when the difference between the given position of the probe 120 and the expected position of the SBLG 110 in the integrated circuit device 100 is greater than a predetermined threshold.

The expected position of the SBLG 110 in the integrated circuit device 100 can be whether defined relative to the overall integrated circuit device 100, or relative, when existing, to the other SBLG 110 implemented in the integrated circuit device 100.

When a plurality of correlation peaks is detected in the correlation signal, the first comparison can be performed for the different peaks of the plurality.

Thus, such SBLG 110 implemented in the integrated circuit 100 can be identified through the detection of the waveform of the EM field 140 radiated by the leakage current in the integrated circuit 100. Indeed, the variations of such waveform is representative of the variations of the leakage current which is in turn representative of the deterministic internal state value changes of the SBLG 110. Consequently, a non-detection of an expected SBLG 110 at a given location in the integrated circuit, or a modification in the expected (relative) location of a given SBLG 110 (in comparison with positions of others SBLG 110), can be interpreted as representative of a hardware modification of the integrated circuit device 100 or of an unauthorized integration, in the integrated circuit device 100, of a proprietary hardware block which incorporates SBLG(s) 110.

Referring now to **Figure 3a****,** we describe the method for authenticating the hardware design of the integrated circuit device 100 according to another embodiment of the present disclosure.

More particularly, the embodiment of Figure 3a comprises the steps of the embodiment of Figure 3 (in any of the embodiments discussed above). in addition to those steps, the embodiment of Figure 3a comprises a **step S310** wherein the electronic device 130 sends a trigger command to the integrated circuit device 100 for having the SBLG 110 (i.e. the SBLG 110 with the deterministic internal state value changes corresponding to the model signal used for performing the correlation in step S340) to generate the deterministic internal state value changes inducing current leakages with corresponding deterministic variations in the integrated circuit device 100. Such step S310 takes place before the step S320 discussed above so that the measurement signal received from the EM probe 120 is also representative of the trigger command, i.e. the start of the expected deterministic variations of the waveform of the measurement signal is related to the trigger command. Consequently, in such embodiment, when one correlation peak is detected in the correlation signal delivered during the execution of step S340, during a **step S360,** the electronic device 130 performs a second comparison between, on one hand, an expected propagation duration of the trigger command up to the SBLG 110 and, on the other hand, time information representative of a time duration between an instant of execution of the sending the trigger command (step S310) and the correlation peak. A difference between the expected propagation duration and the time information is representative of a hardware modification of the integrated circuit device 100 or of an unauthorized integration, in the integrated circuit device 100, of a proprietary hardware block which incorporates SBLG(s) 110. For instance, it can be decided that the integrated circuit device 100 has been modified when the difference between the expected propagation duration and the time information is greater than a predetermined threshold. When a plurality of correlation peaks is detected in the correlation signal, the second comparison can be performed for the different peaks of the plurality.

In some embodiments, the second comparison is performed in addition to the first comparison. In such cases, the authentication of the hardware design of the integrated circuit device 100 relies both on:
- the detection of a difference between the given position of the probe 120 and the expected position of the SBLG 110 in the integrated circuit device 100; and
- the detection of a difference between the expected propagation duration and the time information.

However, in other embodiments, the second comparison is performed in place of the first comparison (e.g. the step S350 is not executed). In such embodiments, the authentication of the hardware design of the integrated circuit device 100 relies only on the detection of a difference between the expected propagation duration and the time information.

Alternatively, in some embodiments, the steps S310 and S360 are not executed (e.g. as in the embodiment of Figure 3) and the authentication of the hardware design of the integrated circuit device 100 relies only on the detection of a difference between the given position of the probe 120 and the expected position of the SBLG 110 in the integrated circuit device 100 during the execution of the step S350.

In some embodiments, during the step S310 the electronic device 130 sends a seed value for setting the internal state of the SBLG 110 to an initial value. This allows having different deterministic internal state value changes patterns for a given SBLG 110. However, in some embodiments as in the embodiment of Figure 3a, during step S310, the electronic device 130 does not send a seed value, e.g. when the SBLG(s) is(are) configured for having its internal state that takes a default initial internal state (e.g. a reset internal state value) at power ON as discussed above in relation with Figure 3.

Back to Figure 3a, when the SBLG 110 (i.e. the SBLG 110 with the deterministic internal state value changes corresponding to the model signal used for performing the correlation in step S340) comprises a feedback loop from an output of a given logical function toward an input of said given logical function (whether a linear or a non-linear logical function as discussed above in relation with Figure 1), in a **step S330,** the electronic device 130 performs a spectral analysis of the measurement signal (received during the execution of step S320) delivering a frequency domain representation of the measurement signal. In such embodiments, the step S340 (step of performing a correlation), the step S350 (step of performing a first comparison), and/or the step S360 (step of performing a second comparison) are executed when a frequency response is detected at a predetermined frequency in the frequency domain representation of the measurement signal.

For instance, the predetermined frequency is a function of the inverse of the processing time of the loop back logical function implemented in the feedback loop of the SBLG 110. The detection of the presence of the SBLG 110 is thus simplified through the implementation of such spectral analysis (e.g. a Fourier transform of the measurement signal). This allows e.g. verifying that the probe 120 is well positioned above the SBLG 110 before performing the correlation during the execution of the step S340. However, in some embodiments (e.g. as in the embodiment of Figure 3), the step S330 is not executed and the correlation is directly performed during the execution of the step S340.

## Claims

1. Method for authenticating the hardware design of an integrated circuit device (100) comprising at least one specific block of logic gates (110), hereafter SBLG, configured for generating deterministic internal state value changes inducing current leakages with corresponding deterministic variations in said integrated circuit device,
wherein an electronic device (130) executes, for at least one SBLG (110):
- **sending** (S300) a command to an electromagnetic, hereafter EM, probe (120) for having the probe positioned at a given position above a surface of the integrated circuit device for sensing the EM field (140) at the given position;
- **receiving** (S320) from the EM probe a measurement signal representative of the EM field at the given position;
- **performing** (S340) a correlation between the measurement signal and a model signal representative of the deterministic internal state value changes in the SBLG delivering a correlation signal,
**characterized in that** the electronic device further executes:
- when at least one correlation peak is detected in said correlation signal, **performing a first comparison** (S350) between, on one hand, the given position of the probe and, on the other hand, an expected position of the SBLG in the integrated circuit device, a difference between the given position of the probe and the expected position of the SBLG in the integrated circuit device being representative of a hardware modification of the integrated circuit device or of an unauthorized integration, in the integrated circuit device, of a proprietary hardware block incorporating the SBLG.

2. Method according to claim 1, wherein the electronic device executes, for said at least one SBLG:
- **sending** (S310) a trigger command to the integrated circuit device for having the SBLG to generate the deterministic internal state value changes inducing current leakages with corresponding deterministic variations in said integrated circuit device,
wherein when said at least one correlation peak is detected in said correlation signal, **performing a second comparison** (S360), in addition to said performing a first comparison or in place of said performing a first comparison, between, on one hand, an expected propagation duration of the trigger command up to the SBLG and, on the other hand, time information representative of a time duration between an instant of execution of said sending the trigger command and the correlation peak, a difference between the expected propagation duration and the time information being representative of a hardware modification of the integrated circuit device or of an unauthorized integration, in the integrated circuit device, of a proprietary hardware block incorporating the SBLG.

3. Method according to claim 2, wherein said sending a trigger command to the integrated circuit device comprises sending a seed value for setting the internal state of the SBLG to an initial value.

4. Method according to any one of the claims 1 to 3, wherein said at least one SBLG comprises a logical function,
and wherein said model signal is a function of a binary word resulting of an XOR logical function taking as arguments an input binary word of said logical function and an output binary word of said logical function.

5. Method according to claim 4, wherein said function of said binary word comprises a Hamming weight of said binary word.

6. Method according to claim 4 or 5, wherein said at least one SBLG comprises a feedback loop from an output of said logical function toward an input of said logical function, and wherein the electronic device executes, for said at least one SBLG:
- **performing a spectral analysis** (S330) of said measurement signal delivering a frequency domain representation of said measurement signal,
said performing a correlation, said performing a first comparison and/or said performing a second comparison being executed when a frequency response is detected at a predetermined frequency in said frequency domain representation of said measurement signal.

7. Computer program product **characterized in that** it comprises program code instructions for implementing a method according to any one of the claims 1 to 6.

8. Electronic device (130) for authenticating the hardware design of an integrated circuit device (100) comprising at least one specific block of logic gates (110), hereafter SBLG, configured for generating deterministic internal state value changes inducing current leakages with corresponding deterministic variations in said integrated circuit device,
the electronic device comprising a processor (202) or a dedicated computing machine configured for:
- **sending** a command to an electromagnetic, hereafter EM, probe for having the probe positioned at a given position above a surface of the integrated circuit device for sensing the EM field at the given position;
- **receiving** from the EM probe a measurement signal representative of the EM field at the given position;
- **performing** a correlation between the measurement signal and a model signal representative of the deterministic internal state value changes in the SBLG delivering a correlation signal,
**characterized in that** the processor or the dedicated computing machine is further configured for:
- when at least one correlation peak is detected in said correlation signal, **performing a first comparison** between, on one hand, the given position of the probe and, on the other hand, an expected position of the SBLG in the integrated circuit device, a difference between the given position of the probe and the expected position of the SBLG in the integrated circuit device being representative of a hardware modification of the integrated circuit device or of an unauthorized integration, in the integrated circuit device, of a proprietary hardware block incorporating the SBLG.

## Patentansprüche

1. Verfahren zur Authentifizierung des Hardware-Designs einer integrierten Schaltkreisvorrichtung (100), die mindestens einen spezifischen Block von Logikgattern (110), im Folgenden SBLG genannt, umfasst, der so konfiguriert ist, dass er deterministische interne Zustandswertänderungen erzeugt, die Stromleckagen mit entsprechenden deterministischen Variationen in der integrierten Schaltkreisvorrichtung induzieren,
wobei eine elektronische Vorrichtung (130) für mindestens einen SBLG (110) ausführt:
- **Senden** (S300) eines Befehls an eine elektromagnetische, im Folgenden EM-,Sonde (120), um die Sonde an einer gegebenen Position über einer Oberfläche der integrierten Schaltkreisvorrichtung zu positionieren, um das EM-Feld (140) an der gegebenen Position zu erfassen;
- **Empfangen** (S320) eines Messsignals von der EM-Sonde, das das EM-Feld an der angegebenen Position darstellt;
- **Durchführen** (S340) einer Korrelation zwischen dem Messsignal und einem Modellsignal, das die deterministischen internen Zustandswertänderungen im SBLG darstellt, wobei ein Korrelationssignal erzeugt wird,
**dadurch gekennzeichnet, dass** die elektronische Vorrichtung ferner ausführt:
- wenn mindestens ein Korrelationspeak in dem Korrelationssignal erkannt wird, **Durchführen eines ersten Vergleichs** (S350) zwischen, einerseits, der gegebenen Position der Sonde und, andererseits, einer erwarteten Position des SBLG in der integrierten Schaltkreisvorrichtung, wobei eine Differenz zwischen der gegebenen Position der Sonde und der erwarteten Position des SBLG in der integrierten Schaltkreisvorrichtung eine Hardwaremodifikation der integrierten Schaltkreisvorrichtung oder eine unautorisierte Integration eines proprietären Hardwareblocks, der das SBLG enthält, in der integrierten Schaltkreisvorrichtung darstellt.

2. Verfahren nach Anspruch 1, wobei die elektronische Vorrichtung für das mindestens eine SBLG ausführt:
- **Senden** (S310) eines Auslösebefehls an die integrierte Schaltkreisvorrichtung, damit die SBLG die deterministischen internen Zustandswertänderungen erzeugt, die Stromleckagen mit entsprechenden deterministischen Variationen in der integrierten Schaltkreisvorrichtung hervorrufen,
wobei, wenn in dem Korrelationssignal mindestens ein Korrelationspeak erkannt wird, **ein zweiter Vergleich durchgeführt wird** (S360), zusätzlich zu der Durchführung eines ersten Vergleichs oder anstelle der Durchführung eines ersten Vergleichs, zwischen, einerseits, einer erwarteten Ausbreitungsdauer des Auslösebefehls bis zum SBLG und, andererseits, Zeitinformationen, die eine Zeitdauer zwischen einem Ausführungszeitpunkt des Sendens des Auslösebefehls und dem Korrelationspeak darstellen, wobei eine Differenz zwischen der erwarteten Ausbreitungsdauer und den Zeitinformationen eine Hardwareänderung der integrierten Schaltkreisvorrichtung oder eine unautorisierte Integration eines proprietären Hardwareblocks, der das SBLG enthält, in der integrierten Schaltkreisvorrichtung darstellt.

3. Verfahren nach Anspruch 2, wobei das Senden eines Auslösebefehls an die integrierte Schaltkreisvorrichtung das Senden eines Startwerts zum Einstellen des internen Zustands des SBLG auf einen Anfangswert umfasst.

4. Verfahren nach einem der Ansprüche 1 bis 3, wobei das mindestens eine SBLG eine logische Funktion umfasst,
und wobei das Modellsignal eine Funktion eines binären Wortes ist, das sich aus einer XOR-Logikfunktion ergibt, die als Argumente ein Eingangsbinärwort der Logikfunktion und ein Ausgangsbinärwort der Logikfunktion verwendet.

5. Verfahren nach Anspruch 4, wobei die Funktion des binären Wortes ein Hamming-Gewicht des binären Wortes umfasst.

6. Verfahren nach Anspruch 4 oder 5, wobei das mindestens eine SBLG eine Rückkopplungsschleife von einem Ausgang der logischen Funktion zu einem Eingang der logischen Funktion umfasst und wobei die elektronische Vorrichtung für das mindestens eine SBLG ausführt:
- **Durchführen einer Spektralanalyse** (S330) des Messsignals, die eine Darstellung des Messsignals im Frequenzbereich liefert,
das Ausführen einer Korrelation, das Ausführen eines ersten Vergleichs und/oder das Ausführen eines zweiten Vergleichs, die ausgeführt werden, wenn eine Frequenzantwort bei einer vorgegebenen Frequenz in der Frequenzbereichsdarstellung des Messsignals erkannt wird.

7. Computerprogrammprodukt, **dadurch gekennzeichnet, dass** es Programmcodeanweisungen zur Implementierung eines Verfahrens nach einem der Ansprüche 1 bis 6 umfasst.

8. Elektronische Vorrichtung (130) zur Authentifizierung des Hardware-Designs einer integrierten Schaltkreisvorrichtung (100), die mindestens einen spezifischen Block von Logikgattern (110), im Folgenden SBLG genannt, umfasst, der so konfiguriert ist, dass er deterministische interne Zustandswertänderungen erzeugt, die Stromleckagen mit entsprechenden deterministischen Variationen in der integrierten Schaltkreisvorrichtung induzieren,
wobei die elektronische Vorrichtung einen Prozessor (202) oder eine dedizierte Rechenmaschine umfasst, die konfiguriert ist zum:
- **Senden** eines Befehls an eine elektromagnetische, im Folgenden EM-,Sonde, um die Sonde an einer gegebenen Position über einer Oberfläche der integrierten Schaltkreisvorrichtung zu positionieren, um das EM-Feld an der gegebenen Position zu erfassen;
- **Empfangen** eines Messsignals von der EM-Sonde, das das EM-Feld an der gegebenen Position darstellt;
- **Durchführen** einer Korrelation zwischen dem Messsignal und einem Modellsignal, das die deterministischen internen Zustandswertänderungen im SBLG darstellt, und Liefern eines Korrelationssignals,
**dadurch gekennzeichnet, dass** der Prozessor oder die dedizierte Rechenmaschine ferner konfiguriert ist zum:
- wenn mindestens ein Korrelationspeak in dem Korrelationssignal erkannt wird, **Durchführen eines ersten Vergleichs** zwischen, einerseits, der gegebenen Position der Sonde und, andererseits, einer erwarteten Position des SBLG in der integrierten Schaltkreisvorrichtung, wobei eine Differenz zwischen der gegebenen Position der Sonde und der erwarteten Position des SBLG in der integrierten Schaltkreisvorrichtung eine Hardwaremodifikation der integrierten Schaltkreisvorrichtung oder eine unautorisierte Integration eines proprietären Hardwareblocks, der das SBLG enthält, in der integrierten Schaltkreisvorrichtung darstellt.

## Revendications

1. Procédé d'authentification de la conception matérielle d'un dispositif de circuit intégré (100) comportant au moins un bloc spécifique de portes logiques (110), ci-après SBLG, configuré pour générer des changements de valeur d'état interne déterministes induisant des fuites de courant avec des variations déterministes correspondantes dans ledit dispositif de circuit intégré,
dans lequel un dispositif électronique (130) exécute, pour au moins un SBLG (110) :
- **l'envoi** (S300) d'une commande à une sonde (120) électromagnétique, ci-après EM, pour que la sonde soit positionnée à une position donnée au-dessus d'une surface du dispositif de circuit intégré pour détecter le champ EM (140) à la position donnée ;
- **la réception** (S320) à partir de la sonde EM d'un signal de mesure représentatif du champ EM à la position donnée ;
- **la réalisation** (S340) d'une corrélation entre le signal de mesure et un signal modèle représentatif des changements de valeur d'état interne déterministes dans le SBLG délivrant un signal de corrélation,
**caractérisé en ce que** le dispositif électronique exécute en outre :
- lorsqu'au moins un pic de corrélation est détecté dans ledit signal de corrélation, **la réalisation d'une première comparaison** (S350) entre, d'une part, la position donnée de la sonde et, d'autre part, une position attendue du SBLG dans le dispositif de circuit intégré, une différence entre la position donnée de la sonde et la position attendue du SBLG dans le dispositif de circuit intégré étant représentative d'une modification matérielle du dispositif de circuit intégré ou d'une intégration non autorisée, dans le dispositif à circuit intégré, d'un bloc matériel propriétaire incorporant le SBLG.

2. Procédé selon la revendication 1, dans lequel le dispositif électronique exécute, pour ledit au moins un SBLG :
- **l'envoi** (S310) d'une commande de déclenchement au dispositif de circuit intégré pour que le SBLG génère les changements de valeur d'état interne déterministes induisant des fuites de courant avec des variations déterministes correspondantes dans ledit dispositif de circuit intégré,
dans lequel lorsque ledit au moins un pic de corrélation est détecté dans ledit signal de corrélation, **la réalisation d'une deuxième comparaison** (S360), en plus de ladite réalisation d'une première comparaison ou à la place de ladite réalisation d'une première comparaison, entre, d'une part, une durée de propagation attendue de la commande de déclenchement jusqu'au SBLG et, d'autre part, une information temporelle représentative d'une durée entre un instant d'exécution dudit envoi de la commande de déclenchement et le pic de corrélation, une différence entre la durée de propagation attendue et l'information temporelle étant représentative d'une modification matérielle du dispositif de circuit intégré ou d'une intégration non autorisée, dans le dispositif de circuit intégré, d'un bloc matériel propriétaire incorporant le SBLG.

3. Procédé selon la revendication 2, dans lequel ledit envoi d'une commande de déclenchement au dispositif de circuit intégré comporte l'envoi d'une valeur de départ pour mettre l'état interne du SBLG à une valeur initiale.

4. Procédé selon l'une quelconque des revendications 1 à 3, dans lequel ledit au moins un SBLG comporte une fonction logique,
et dans lequel ledit signal modèle est une fonction d'un mot binaire résultant d'une fonction logique XOR prenant comme arguments un mot binaire d'entrée de ladite fonction logique et un mot binaire de sortie de ladite fonction logique.

5. Procédé selon la revendication 4, dans lequel ladite fonction dudit mot binaire comporte un poids de Hamming dudit mot binaire.

6. Procédé selon la revendication 4 ou 5, dans lequel ledit au moins un SBLG comporte une boucle de rétroaction d'une sortie de ladite fonction logique vers une entrée de ladite fonction logique, et dans lequel le dispositif électronique exécute, pour ledit au moins un SBLG :
- **la réalisation d'une analyse spectrale** (S330) dudit signal de mesure délivrant une représentation de domaine fréquentiel dudit signal de mesure,
ladite réalisation d'une corrélation, ladite réalisation d'une première comparaison et/ou ladite réalisation d'une deuxième comparaison étant exécutées lorsqu'une réponse en fréquence est détectée à une fréquence prédéterminée dans ladite représentation de domaine fréquentiel dudit signal de mesure.

7. Produit programme d'ordinateur **caractérisé en ce qu'**il comporte des instructions de code de programme pour mettre en œuvre un procédé selon l'une quelconque des revendications 1 à 6 .

8. Dispositif électronique (130) pour l'authentification de la conception matérielle d'un dispositif de circuit intégré (100) comportant au moins un bloc spécifique de portes logiques (110), ci-après SBLG, configuré pour générer des changements de valeur d'état interne déterministes induisant des fuites de courant avec des variations déterministes correspondantes dans ledit dispositif de circuit intégré,
le dispositif électronique comportant un processeur (202) ou une machine informatique dédiée configuré(e) pour :
- **l'envoi** d'une commande à une sonde électromagnétique, ci-après EM, pour que la sonde soit positionnée à une position donnée au-dessus d'une surface du dispositif de circuit intégré pour détecter le champ EM à la position donnée ;
- **la réception** à partir de la sonde EM d'un signal de mesure représentatif du champ EM à la position donnée ;
- **la réalisation** d'une corrélation entre le signal de mesure et un signal modèle représentatif des changements de valeur d'état interne déterministes dans le SBLG délivrant un signal de corrélation,
**caractérisé en ce que** le processeur ou la machine informatique dédiée est en outre configuré pour :
- lorsqu'au moins un pic de corrélation est détecté dans ledit signal de corrélation, **la réalisation d'une première comparaison** entre, d'une part, la position donnée de la sonde et, d'autre part, une position attendue du SBLG dans le dispositif de circuit intégré, une différence entre la position donnée de la sonde et la position attendue du SBLG dans le dispositif de circuit intégré étant représentative d'une modification matérielle du dispositif de circuit intégré ou d'une intégration non autorisée, dans le dispositif à circuit intégré, d'un bloc matériel propriétaire incorporant le SBLG.
